(19) Europäisches Patentamt
European Patent Office
Office européen des brevets

(11) **EP 1 354 858 A2**

(12) **EUROPEAN PATENT APPLICATION**

(43) Date of publication:
**22.10.2003 Bulletin 2003/43**

(51) Int Cl.[7]: **C02F 1/48**

(21) Application number: **02019135.9**

(22) Date of filing: **29.08.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **11.03.2002 JP 2002064662**

(71) Applicant: **Tsunematsu, Toshiaki**
**Machida-shi, Tokyo (JP)**

(72) Inventor: **Tsunematsu, Toshiaki**
**Machida-shi, Tokyo (JP)**

(74) Representative: **Grünecker, Kinkeldey,**
**Stockmair & Schwanhäusser Anwaltssozietät**
**Maximilianstrasse 58**
**80538 München (DE)**

(54) **Device for generating magnetically treated water or magnetically treated liquid fuel**

(57)     A device comprises a joint member having a water or liquid fuel inflow passage, a front member of housing for receiving untreated water or liquid fuel therein from the joint member, a screw guide for accommodating permanent magnets therein, having multiple helical water or liquid fuel passages and providing a magnetic field crossing the water or liquid fuel passing through water or liquid fuel passages to magnetically treat water or liquid fuel, a cylinder of housing for accommodating screw guide therein and a rear member of housing for flowing the treated water or liquid fuel out. The screw guide is a ceramic mold.

# F I G. 1

EP 1 354 858 A2

**Description**

BACKGROUND OF THE INVENTION

This invention relates to a device for generating magnetically treated water in which water is purified by miniaturizing molecular clusters of water using magnetic force and a device for magnetically treating liquid fuel in which fuel cost is improved and noxious fume is decreased by miniaturizing connections between carbons of liquid fuel having a main component of combined carbon hydride to promote complete combustion using magnetic force.

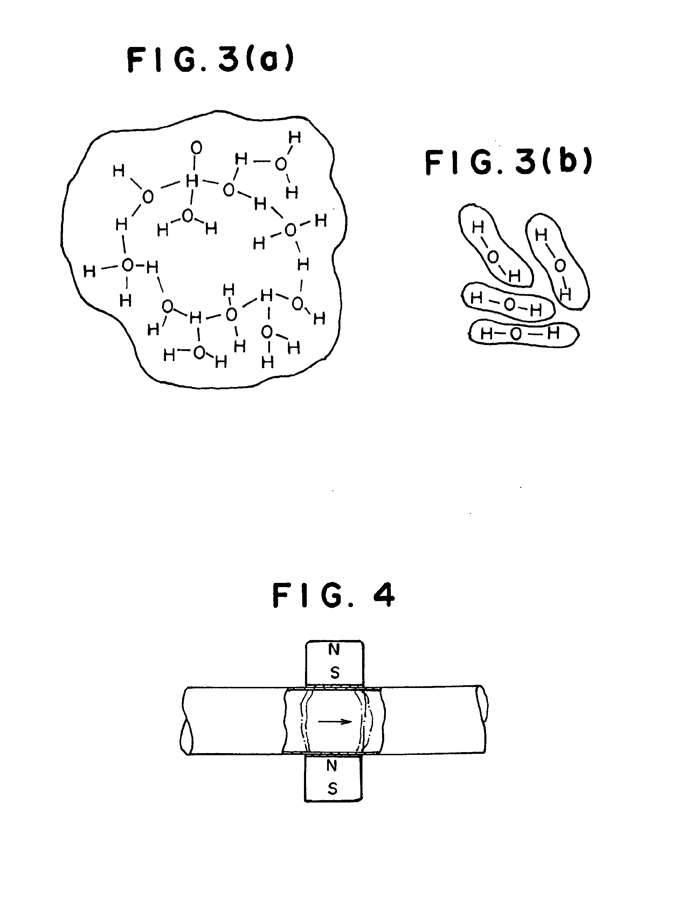

In general a molecule of water comprises one oxygen (O) and two hydrides (H). As shown in Fig. 3a, molecules of water are combined irregularly, and this kind of molecular clusters are included in water a lot. Properties of water such as boiling point or melting point are determined by combined state of molecular clusters so that its boiling point or melting point is higher or lower compared with other hydride compounds. Furthermore, degree of hardness, sense of taste or preference of water is determined by the ratio of contents of materials such as Magnesium (Mg), Calcium (Ca) or Potassium (K) as water components to molecular mass. In general molecular clusters of water comprises twelve ones. It is known that as this kind of clusters becomes small as shown in Fig. 3b, the original properties of water are activated to promote chemical reaction as solvate.

The hydrogen atom is sandwiched between atoms such as oxygen, fluorine or nitrogen or the like which have higher electronegativity. The hydrogen bond or bridge is to bridge atoms on the opposite sides. Due to hydrogen bond, the intervened atoms are positively charged and combined atoms are negatively charged. Therefore, take a water molecule for instance, the intervened hydrogen atom is positively charged and the oxygen is negatively charged.

In the meanwhile, in case that a great quantity of calcium is included in water in supersaturated state the calcium is partially crystallized to precipitate on the inner wall surface of the pipe arrangement. Once the calcium precipitates, the growth of the crystallization of the calcium is promoted which leads to the deterioration of efficiency of utilization of the pipe arrangement.

In order to treat the calcium in water solution for preventing the precipitation of calcium in the pipe arrangement, the calcium is separated from the water by condensation precipitation, or the precipitation of the calcium is prevented by the charge of the dispersant. However, the condensation precipitation requires a large scale of leased facility, the charge of conditioner or medical agent requires operation costs to decrease the economical efficiency and the medical agent would be harm to a healthy person.

Thus, the dissolved calcium is crystallized to be precipitated into the water by making the molecular clusters of water including the calcium small to promote the chemical reaction, and is prevented for deposition on the inner wall of the pipe arrangement.

The water consisting of miniaturized molecular clusters can have good effects in a wide range of applications for domestic non-commercial water, industrial water or many kinds of water treatment. That is, as for domestic non-commercial water it is suitable for drinking water, cooking water or gardening water since ecological activity is activated. As for industrial water it is suitable for detergent or washing water for many kinds of parts or it can be used in a process of food industry since detergency is enhanced. Furthermore, as for water treatment it is suitable for purification treatment at a purification plant to obtain a good quality of drinking water since dirt is not generated in the cistern or water storage tank, or pipe arrangement, micro-organisms are easily treated and precipitation in the sedimentation tank is good.

It is known that in order to miniaturize molecular clusters of water, that is, obtain the activated water, untreated water is caused to pass in magnetic field. Fig. 4 shows a treating device for magnetically treating the untreated water to miniaturize molecular clusters. More specifically, the untreated water passing in the pipe arrangement is caused to pass between N pole end and S pole end of bar magnets By this construction, miniaturized molecular clusters are obtained. This is why each element in the molecular clusters are subject to Lorentz force when the water passes in the magnetic field, and by the effect of the Lorentz force hydrogen-hydrogen bond in some molecular clusters are separated to break up the molecular clusters and then molecular clusters are thought to be miniaturized.

More specifically, when the water is caused to pass beyond 10mm per 1second, between N pole and S pole of the bar magnets the molecules with high electric charge are generated by Lorentz force to be scattered toward the inner surface of the pipe arrangement and thus crystal lattices of the calcium carbonate derived by crystallisation of the calcium carbonate are broken up gradually.

Furthermore when the crystal lattices of the calcium carbonate are broken up, calcium hydroxide and hydrogen ion are generated by Ca ions acting on the molecules of water. Then $CO_3$ ions are turned into carbon dioxide gas and oxygen and returned into water. The materials crystallisation of which is broken up is ionized. However when it is in super saturation state, it is returned into water with the less size of micrometer.

Furthermore the red ruster which is a bivarent ferric oxide having no magnetism is turned into a trivarent ferric oxide or black ruster gradually which prevents ferric oxide from rusting and thus the rusting in the pipe arrangement is prevented. As mentioned above, when the ionized particles runs in the pipe arrangement along the wall thereof it impinge against the molecular cluster of water to break up hydrogen- hydrogen bonds which connect the molecules of water. As a result, the molecular clusters of water is miniaturized.

In this way, by passing the untreated water in the magnetic field generated by the permanent magnets, the molecular clusters of water are caused to be miniaturized which leads to the removing of the attachments in the pipe arrangement and hardness of water suitable for drinking water.

By the way, the above-mentioned Lorentz force is a force which effects electric charges moving in the magnetic field and is obtained by the following formula.

$$F=eV*B$$

where e is charges of particle(C), V is velocity of charge(m/s) and B is magnetic flux density.

The direction in which Lorentz force effects charge is perpendicular to both the direction of the charge and the direction of the magnetic field. The Lorentz force is proportional to magnetic flux density and velocity of charge as clear from the .formula.

Therefore, it is necessary to increase this Lorentz force in order to treat a great quantity of water effectively for a short time. This can be made by increasing magnetic flux density or increasing velocity of electric charge that is water. However, in case of increasing magnetic flux density, high-powered permanent magnets or an electromagnet are required. Consequentially, the costs rendered in facilities or reservation of installation location can not be decreased. Moreover, water passages become narrow since concentration of magnetic fluxes in narrow region is required. As a result the resistance of pipe arrangement is increased and it is not used for waste water including flotages.

Moreover, a motor of high hauling power is required to in order to increase the velocity of water and for this purpose pipe arrangement of high withstand pressure is required, which leads to the increase of maintenance fee and high costs. Therefore, when the device shown in Fig. 4 is actually used, more stronger permanent magnets should be disposed in a wide range. In order to increase the velocity of water a pump for accelerating flow rate driven by a motor is required, and thus maintenance fees are increased. In case of domestic use, this kind of treating device is not proper in use because of the installation location and maintenance. Therefore a novel device for generating magnetically treated water is requested.

Consequently the applicant proposed in the Japanese Laid Open Publication 107765/2000 a device for generating magnetically treated water which is simple in construction and can treat tap water magnetically in low cost. In the invention disclosed in the publication, it is shown that both residual chlorine and hardness are enhanced compared with the untreated water.

In the invention, a device for generating magnetically treated water using permanent magnets, ceramic balls for promoting ionization to generate mineral components and a ceramic ball accommodator for accommodating a lot of ceramic balls therein are required. Consequently its construction becomes large inevitably, the accommodating density of the ceramic ball accommodator is low because of its sphere construction and the effects of the ceramic balls are deteriorated due to secular variation. Consequently the exchange of ceramic balls is required.

In the meantime as for the internal combustion engine for automobiles tenderness to environment and energy saving are requested particularly. This is why carbon monoxide (CO), carbon hydride (HC) and nitrogen oxides (NOx) are causative materials of air pollution and emissions of these harmful materials should be suppressed and the internal combustion in which the combustion of fuel is less is requested. Furthermore at the diesel engine which is mileage-efficient, graphite and suspended fine substance in exhaust gas is harmful and these materials is requested to be decreased.

It is known that complete combustion is promoted to increase fuel efficiency by passing fuel through magnetic field to separate bonds of fuel molecules and then to miniaturize the fuel molecules. This utilizes magnetic nuclear resonance and its principle is based on magnetic property of atomic nucleus. Since the atomic nucleus consists of positively charged protons and neutrons, when the positively charged protons rotate, small magnets are generated as the current flows in the coil. The size of the magnets are determined by the direction of the protons in the nucleus. When the nucleus thought of as small magnet is disposed in the outside magnetic field the protons take orientations in number constrained by quantum mechanics conditions. When radio wave is radiated to the nucleus disposed in the outside magnetic field the nucleus absorbs the radio wave and changes the orientations of nuclear magnetism to generate the phenomenon of magnetic nuclear resonance. Due to the phenomenon of magnetic nuclear resonance the carbon-carbon bonds are weaken and thus the carbon-carbon bonds are separated.

On the other hand a method of separating bonds or combinations between the molecules by influencing infra-red radiation on liquid fuel has been tried. According to the method the liquid fuel is caused to pass the container filling ceramic balls therein. By the effect of infra-red radiation radiated from the ceramic balls. Thus the bonds between carbon and hydrogen are weakened.

However, high powered permanent magnets or electromagnet is required to produce a nuclear electromagnet resonant device in use of nuclear electromagnet resonant effect. There are problems about location space, weight and costs. Moreover, for the electromagnet there would be malfunction of electric system. Moreover, there would be malfunction of electronic device due to magnetism leakage and there is a risk of traffic accident due to malfunction of electric system.

At the device for using ceramic balls radiating infra-red radiation, in order to use the above-mentioned effects its construction becomes large inevitably. Furthermore its storage density is decreased and at the same time the effects of ceramic balls is deteriorated due to its secular change. Therefore the ceramic balls should be exchanged at regular intervals. Furthermore, when the liquid fuel remains in the retainer fuel effects are deteriorated and inversely harmful exhaust gas is discharged.

Furthermore, although the device which uses liquid fuel treatment using magnetism device and liquid fuel treatment using ceramic balls in series have been proposed, the device becomes long and its construction is complex which leads to large-scale and high costs. As a result, it is hard to use.

SUMMARY OF THE INVENTION

It is therefore an object of the present invention to provide a device for generating magnetically treated water which is simple in construction, miniaturize molecular clusters of water and generates ionized water including a lot of minerals which has a nice taste.

It is another object of the present invention to provide a device for magnetically treating liquid fuel which a device for generating magnetically treated water is applicable to, and separates carbon-carbon bond to facilitate complete combustion and enhance fuel cost.

To accomplish the above-mentioned object, there is provided a device for generating magnetically treated water in which molecular clusters of a large quantity of water molecule combined in different directions by hydrogen bonding are magnetically treated to be miniaturized which comprises a joint member having a water inflow passage, a front member of housing for receiving untreated water therein from said joint member, a screw guide for accommodating permanent magnets therein, having multiple helical water passages and providing a magnetic field crossing the water passing through said water passages to magnetically treat water, a cylinder of housing for accommodating said screw guide therein and a rear member of housing for flowing the treated water out, said screw guide being a ceramic mold made of multiple element coexistence special ore which is capable of magnetically treating said water and at the same time ionizing said water.

Furthermore, the multiple element coexistence special ore comprises a radioactive ore radiating slight radial ray or a granite.

There is provided a device for magnetically treating liquid fuel in which carbon-carbon bonds of liquid fuel are separated by magnetic effect to promote complete combustion which comprises a joint member having a liquid fuel inflow passage, a front member of housing for receiving untreated liquid fuel therein from said joint member, a screw guide for accommodating permanent magnets therein, having multiple helical water passages and providing a magnetic field crossing the liquid fuel passing through said water passages to magnetically treat liquid fuel, a cylinder of housing for accommodating said screw guide therein and a rear member of housing for flowing the treated liquid fuel out, said screw guide being a ceramic mold made of multiple element coexistence special ore which is capable of magnetically treating said liquid fuel and at the same time ionizing said liquid fuel.

Furthermore, the multiple element coexistence special ore comprises a radioactive ore radiating slight radial ray or a granite.

There is provided a device for magnetically treating liquid fuel in which carbon-carbon bonds of liquid fuel are separated by magnetic effect to promote complete combustion which comprises a joint member having a liquid fuel inflow passage, a front member of housing for receiving untreated liquid fuel therein from said joint member, a screw guide for accommodating permanent magnets therein, having multiple helical water passages and providing a magnetic field crossing the liquid fuel passing through said water passages to magnetically treat liquid fuel, a cylinder of housing for accommodating said screw guide therein, a rear member of housing for flowing the treated liquid fuel out, and a magnetism insulator for preventing magnetic force generated at said screw guide from being leaked outside from said housing.

The screw guide is a ceramic mold made of multiple element coexistence special ore which is capable of magnetically treating said water and at the same time ionizing said water. Furthermore, the multiple element coexistence special ore comprises a radioactive ore radiating slight radial ray or a granite.

The magnetism insulator is of a material for generating static electricity by resistance of inflow of liquid fuel and for maintaining the static electricity thus generated. The material of magnetism insulator includes glass-system material, nylon-system resin including glass or material of plus property.

Other objects and aspects of the invention will become apparent from the following description of the embodiments with reference to the accompanying drawings in which:

Fig. 1 is a cross-sectional view for showing a device for generating magnetically treated water or for magnetically treating liquid fuel of the embodiment in accordance with the present invention,

Fig. 2 is a view for showing a screw guide and an arrangement of magnets,

Fig. 3 is a view for explanation on state of water molecules, and

Fig. 4 is a view for explanation on a conventional device for generating magnetically treated water.

DESCRIPTION OF THE PREFERRED EMBODIMENTS

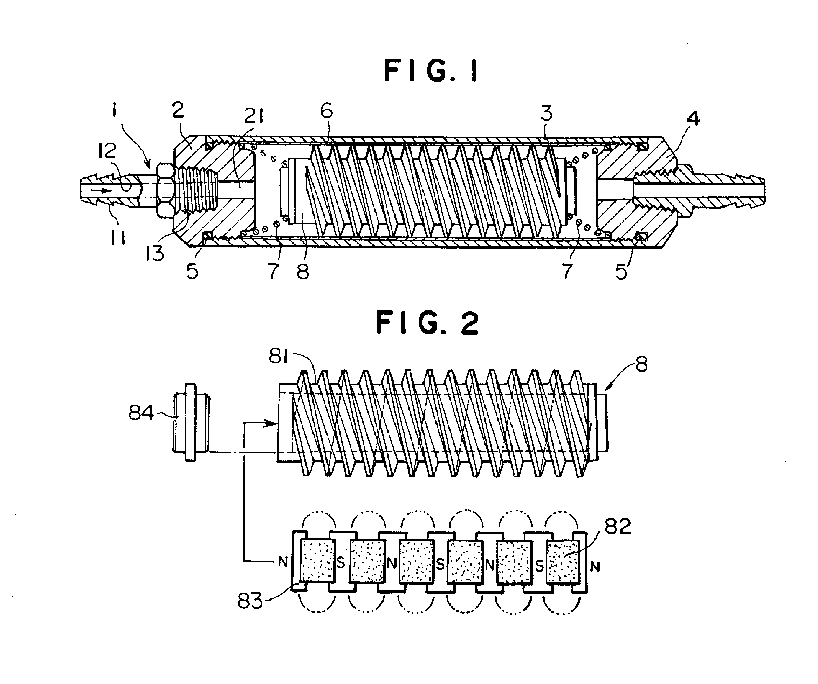

A device for generating magnetically treated water or for magnetically treating liquid fuel of the embodiment in accordance with the present invention will be explained with reference to the drawings. Fig. 1 shows a device for generating magnetically treated water or for magnetically treating liquid fuel of the embodiment in accordance with the present invention. The liquid applicable to the present invention includes water which is used as drinking water, industrial water or agricultural water, and gasoline used in an internal combustion engine, diesel oil and coal oil used in a kerosene stove. At the beginning the device for generating magnetically treated water will be explained and then a device for magnetically treating liquid fuel will be explained.

In Fig. 1 a joint 1 is formed to be threaded into a front member 2 of a housing. The joint 1 is also formed to be inserted in a fuel hose or fuel pipe at its left end and is provided with a tapered portion 11 to prevent the fuel hose or the fuel pipe from being removed out. The joint is provided with an inflow passage12. The joint is also provided at its right end with its thread portion which engages the joint 1 with the front member 2.

The front member 2 is provided at its inner portion with water or fluid passage 21 through which untreated water is flowed into the inner portion. A cylinder member 3 of the housing is sized to accommodate a screw guide 8 hereinafter described. The rear member 4 of the housing flows out magnetically treated water through the screw guide 8 and has the same construction as the front member 2. That is, the housing body comprises the front member 2, the cylinder member 3 and the rear member4. A gasket 5 are provided in the front and rear members and are made of resilient rubber of a circular form in cross section to prevent the leakage of the water or liquid. A magnetism insulating film 6 is provided on the inner wall of the cylinder member 3 to prevent the leakage of the magnetic flux from the screw guide 8. A suspension spring 7 resiliently supports the screw guide 8 on the cylinder 3.

The screw guide 8 has helical water passages 81 as shown in Fig. 2 along which the water flows. In the meantime it is known that at the hydromechanics in order to increase the velocity of the water, the water is caused to be rotated to generate vortex flows or eddy currents., This principle is used in the present invention where the water passages are formed as multiple helical passages to rotate the water and then generate eddy currents. As a result the velocity of the water is increased. Furthermore. Lorentz force, hereinafter described, is increased.

Permanent magnets 82 are provided in the screw guide 8 and are positioned so that the magnetic fluxes of the permanent magnets cross the flowing water. In particular the helical water passages are positioned around the permanent magnets 82 throughout the whole length thereof to take a long time while the molecular clusters of the water are subject to the magnetic fluxes. Therefore, the efficiency of the device according to the present invention is increased compared with conventional device in which the water straightly passes by the bar magnet. As a result, the enhancement of efficiency increases miniaturization of the molecular clusters. Since the permanent magnets 82 are arranged to be cylindrical and the helical water passages 81 provide magnetic field at every portion, the ratio of magnetic field to cross-sectional area of the water passage, that is, the density of magnetic flux to which the water is subject per cross-sectional area is increased compared with conventional device. By this construction, the density of the magnetic flux is increased which leads to increase in Lorentz force. The material suitable for the permanent magnet includes rare earth type such as samarium cobalt, neodymium or the like.

Pole pieces 83 increase magnetic force and act as a magnetic shield, and this pole piece is arranged between a lot of divided permanent magnets 82 and, and comprises closed circuits of magnetism by enclosing the divided individual permanent magnet by the pole pieces 83. Especially, the pole pieces 83 positioned between opposite magnets act as common magnetic boards of magnetic circuits, a big magnetic effect is achieved and a stronger magnetic action is obtained at the same time as space-saving's being achieved. Retainer lid 84 is formed so that permanent magnets 82 accommodated in the screw guide 8 should not dash out outside, and, as a result, permanent magnets 82 is prevented from its movement.

The fluid is treated magnetically by the electromotive force due to Lorentz effect generated when the fluid passes between lines of magnetic force in a vertical direction and by an alternating magnetic effect generated when the fluid passes between N pole of a permanent magnet and S pole of a permanent magnet alternately, and thus a miniaturization of 1 molecular clusters of water is promoted.

In the meantime, conventionally, in order to further ionize the water thus treated by the screw guide, the treated water is caused to pass by a lot of fine sintered ceramic balls accommodated in a ceramic ball accommodator. The sintered ceramic ball is made in a process where silica, alumina, magnesium, kalium, calcium or the like are mixed up, dried for a long time while the temperature is not raised and is sintered for a long time in a conditioned reduction atmosphere in a furnace. However, it is difficult to make a ceramic to be in a sphere form. Because of the sphere form accommodation density is low and thus the device itself becomes large. Furthermore, the ceramic balls should be exchanged at regular intervals since the property of ceramic balls is deteriorated. In particular the conventional device is large since magnetic treatment and ionized treatment are made in the series.

In the present invention, instead of the ceramic balls made of metal materials such as silica, alumina, magnesium, kalium, calcium or the like the screw guide which is made of multiple element coexistence special ore materials such as radioactive ore radiating slight radial ray or tourmaline is used. These ores are derivatives in which the minute electric current in 0.6 milliampere of wavelength in11 microns flows permanently. When the fluid is an air minus ions in the atmosphere are attracted by the plus electrode of the ores and arranged in the minus electrode. Electrons charged on the minus electrode are discharged into fluid instantaneously when screw guide of metal ore touches the fluid. Consequently the fluid is ionized to be decomposed. In the present invention the screw guide is made of multiple element coexistence special ore in a process where the multiple element coexistence special ore is flowed in the mold in the form of screw guide and is sintered into ceramic by the heat of about 500-700 degrees in centigrade. Furthermore, in the present invention in addition of the compositions of the screw guide, the permanent magnets are accommodated in the screw guide. By the construction untreated water can be magnetically treated and at the same time ionized water including a lot of minerals is generated.

Now the device for magnetically treating liquid fuel which miniaturizes carbon-carbon bonds of the liquid fuel to promote complete combustion, and at the same time cuts the fuel cost and decrease unburned residual gas by the complete combustion will be explained. The device is applicable to the internal combustion engine using fuel such as gasoline, diesel oil or kerosene or oil stove. The device fundamentally has the same construction as that of the aforementioned device for generating magnetically treated water. Therefore, the explanation about the device for generating magnetically treated water is applicable to the device for magnetically treating liquid fuel and thus term "water" can be replaced by the term "gasoline", "diesel oil" or "kerosene". When carbon (C) is oxidization reacted into carbon dioxide ($CO_2$ ), that is, is combusted, as the number of carbons in the molecules is less the complete combustion is facilitated and on the contrary as the number of carbons in the molecules is more unburned materials or carbon hydride compounds are increased. Therefore, as carbon-carbon bonds of fuel are separated before combustion, that is, are ionized the oxidization is promoted and thus the unburned materials are decreased. As a result the combustion cost is enhanced and at the same time harmful substances such as carbon hydride compounds, nitrogen oxides (NOx) or the like in the exhaust gas can be reduced.

As explained above, conventionally the most of the devices used together a magnetically treating device and an infrared radiating device using ceramic balls, and mostly the ceramic ball treatment were made after the magnetism treatment. On the contrary, in the present invention the magnetism treatment and the ceramic treatment are made simultaneously by using the screw guide for generating magnetism effects made of sintered ceramic. Consequently the miniaturization of the device can be made, there is no residual fuel and exchange of the ceramic balls is not required.

Now a featured magnetism shield provided in the present invention will be explained. As mentioned above, in the present invention carbon-carbon bonds of the untreated liquid fuel are separated by magnetic force to miniaturize the molecules of liquid fuel. For this purpose the magnetic force generated by the screw guide 8 should be utilized effectively and efficaciously. To the end the magnetic force thus generated must be prevented from the leakage. As mentioned above, magnetism insulator sheet 6 is disposed between the cylinder member 3 and screw guide 8. Its disposed position is characteristic. That is, in order to return magnetic field generated from the screw guide 8 to the original magnetic pole the front member, cylinder member and the rear member are made of magnetic material and it is preferred that the magnetic fluxes between these three members and the screw guide are closed. It was found through the experiments that the great effects are obtained from such construction. Moreover, instead of provisions of magnetism insulator sheet, the insulator resin or glass may be coated on the inner surface of the cylinder member.

It was also found that relation between the materials of insulator sheet and screw guide is important. Through tests in which the permanent magnets are not mounted in the screw guide, that is, the magnetism generating device is not provided it have shown that its properties is enhanced 9.96 percent. The reason may be based on the fact that when the liquid fuel passes by the screw guide positive or negative static electricity is generated by the fluid resistance, and the static electricity thus generated is charged on the insulator sheet or extinguished depending on the nature of insulator sheet material. In case that the screw guide is positively charged, the fuel cost is reduced and harmful gas is decreased even if the permanent magnets are not mounted in the screw guide.

More specifically, when the material of the screw guide is of plus property minus static electricity is generated, while when the material of the screw guide is of minus property plus static electricity is generated. In the present invention, in order to obtain minus ions material of the screw guide should be of plus property. It was confirmed that the above-mentioned ceramic sintered from the metal elements such as silica, alumina, magnesium and the like which is of plus property is suitable to both magnetism effect and electrostatic effect. On the other hand, it is preferred that glass-system material or nylon-system material including glass of minus property is suitable for the insulator sheet material. These materials should be used together.

The list mentioned below shows the results obtained from the test in which the device for magnetically treating liquid fuel according to the present invention is mounted on the car. It is clear from the list that fuel consumption rate is improved 25 % to 26 % compared with that of the no mounting. Furthermore, the present device obtains significant effects compared with the device in which the liquid fuel is caused to pass by the permanent magnets or the device using ceramic balls.

| List | | | | | |
|---|---|---|---|---|---|
| no mounting | | | | | |
| Date | Drive distance | Lubrication | Distance/liter | difference | %UP |
| 7/2 | 208km | 16.0 L | 13.0 km | | |
| mounting | | | | | |
| Date | Drive distance | Lubrication | Distance/liter | difference | %UP |
| 7/3 | 190 km | 11.58 L | 16.40 km | 3.4 km | 26.15 %UP |
| 7/6 | 190 km | 16.55 L | 16.40 km | 3.35 km | 26.53 %UP |
| 7/8 | 195 km | 12.00 L | 16.25 km | 3.25 km | 25.00 %UP |
| 7/2 | 208 km | 11.80 L | 16.35 km | 3.35 km | 25.76 %UP |

In operation the untreated water is flown in the joint member 1 through a hose or pipe connected thereto and is led to the screw guide by the water passage formed inside of the housing. Then the water passes through the helical water passages provided on the screw guide the untreated water is gradually magnetically treated and at the same time ionized by the magnetic effect from the permanent magnets and the material of the screw guide. Then the water thus magnetically treated and ionized passes though the water passage and finally is flown out through the joint member for flow-out.

In case of liquid fuel, for example, in case of use for car the device is positioned between the fuel tank and the engine, and in case of use for oil stove car the device is positioned between the fuel tank and the combustion equipment.

**Claims**

1.   A device for generating magnetically treated water in which molecular clusters of a large quantity of water molecule combined in different directions by hydrogen bonding are magnetically treated to be miniaturized which comprises a joint member having a water inflow passage, a front member of housing for receiving untreated water therein from said joint member, a screw guide for accommodating permanent magnets therein, having multiple helical water passages and providing a magnetic field crossing the water passing through said water passages to magnetically treat water, a cylinder of housing for accommodating said screw guide therein and a rear member of housing for flowing the treated water out, said screw guide being a ceramic mold made of multiple element coexistence special ore which is capable of magnetically treating said water and at the same time ionizing said water.

2.   A device according to claim 1 in which said multiple element coexistence special ore comprises a radioactive ore radiating slight radial ray or a granite.

3.   A device for magnetically treating liquid fuel in which carbon-carbon bonds of liquid fuel are separated by magnetic effect to promote complete combustion which comprises a joint member having a liquid fuel inflow passage, a front member of housing for receiving untreated liquid fuel therein from said joint member, a screw guide for accommodating permanent magnets therein, having multiple helical water passages and providing a magnetic field crossing the liquid fuel passing through said water passages to magnetically treat liquid fuel, a cylinder of housing for accommodating said screw guide therein and a rear member of housing for flowing the treated liquid fuel out, said screw guide being a ceramic mold made of multiple element coexistence special ore which is capable of magnetically treating said liquid fuel and at the same time ionizing said liquid fuel.

4. A device according to claim 1 in which said multiple element coexistence special ore comprises radioactive ore radiating slight radial ray or granite.

5. A device for magnetically treating liquid fuel in which carbon-carbon bonds of liquid fuel are separated by magnetic effect to promote complete combustion which comprises a joint member having a liquid fuel inflow passage, a front member of housing for receiving untreated liquid fuel therein from said joint member, a screw guide for accommodating permanent magnets therein, having multiple helical water passages and providing a magnetic field crossing the liquid fuel passing through said water passages to magnetically treat liquid fuel, a cylinder of housing for accommodating said screw guide therein, a rear member of housing for flowing the treated liquid fuel out, and a magnetism insulator for preventing magnetic force generated at said screw guide from being leaked outside from said housing.

6. A device according to claim 5 in which said magnetism insulator comprises an insulating film positioned between an inner surface of said cylinder and said screw guide.

7. A device according to claim 5 in which said magnetism insulator is an insulator resin or a glass coated on an inner surface of said cylinder.

8. A device according to claim 5 in which said screw guide and said magnetism insulator is of a material for generating static electricity by resistance of inflow of liquid fuel and for maintaining the static electricity thus generated.

9. A device according to claim 5 in which said magnetism insulator is a glass-system material or a resin including glass.

10. A device according to claim 5 in which said screw guide is a ceramic mold made in a process where metal elements including lithium, alumina, magnesium, natrium are mixed up, dried and sintered.

11. A device according to claim 5 in which said screw guide is a ceramic mold made of a radioactive ore radiating slight radial ray or a tourmaline.

# FIG. 1

# FIG. 2

EP 1 354 858 A2

FIG. 3(a)

FIG. 3(b)

FIG. 4